# EUROPEAN PATENT APPLICATION

(11) **EP 3 851 867 A1**
(43) Date of publication of application: **21.07.2021**
(21) Application number: 20193927.9
(22) Date of filing: 01.09.2020
(51) Int. Cl.: G01S 7/00, G01S 7/35, G01S 13/00, G01S 13/32

(54) **DATA SENDING METHOD, DATA RECEIVING METHOD, DATA TRANSMITTING METHOD AND MOBILE TERMINAL**

(30) Priority: 17.01.2020 CN 202010051633
(71) Applicant: Beijing Xiaomi Mobile Software Co., Ltd., Beijing 100085 (CN)
(72) Inventor: PENG, Cong, Beijing, Beijing 100085 (CN); GAO, Wenjun, Beijing, Beijing 100085 (CN)
(74) Representative: dompatent von Kreisler Selting Werner - Partnerschaft von Patent- und Rechtsanwälten mbB

(57) **Abstract**

A data sending method can be applied to a mobile terminal provided with a radar wave transceiver. The method can include: encoding a data file to be sent to obtain an encoded file; and modulating the encoded file and sending it in the form of radar wave via the radar wave transceiver. A wide range of data transmission can be performed in the form of radar wave, by providing the radar wave transceiver in the mobile terminal, thereby enabling the data transmission more conveniently without network environment and complicated steps. One-to-many data transmission can be performed efficiently and conveniently in public multi-user scenarios.

## Description

### BACKGROUND

In multi-person interaction sessions such as meetings and classrooms, it is often necessary to send files to multiple users. In a traditional file-sharing method, files can be transmitted through software in mobile terminals after verification and other steps based over the network.

### SUMMARY

The present disclosure generally relates to the field of smart communication technologies, and more specifically, to a data sending method, a data receiving method, a data transmitting method, a mobile terminal, and a data sending device, a data receiving device, an electronic device and a computer-readable storage medium.

According to a first aspect of the present disclosure, there is provided a data sending method applied to a mobile terminal, the mobile terminal is provided with a radar wave transceiver, and the data sending method includes: encoding a data file to be sent to obtain an encoded file; and modulating the encoded file and sending the same in a form of radar wave via the radar wave transceiver.

In some embodiments, the method further includes: determining a modulation scheme of the radar wave, wherein the modulation scheme includes at least one of the following: frequency modulation, amplitude modulation, or phase modulation; and the modulating the encoded file and sending the same in a form of radar wave via the radar wave transceiver includes: modulating the encoded file based on the modulation scheme and sending the same in the form of radar wave.

In some embodiments, the radar wave is a linear frequency modulation signal.

According to a second aspect of the present disclosure, there is provided a data receiving method applied to a mobile terminal, the mobile terminal is provided with a radar wave transceiver, and the data receiving method includes: receiving radar wave via the radar wave transceiver and demodulating the same to obtain an encoded file; and decoding the encoded file to obtain a data file.

In some embodiments, the method further includes: determining a modulation scheme of the radar wave, wherein the modulation scheme includes at least one of the following: frequency modulation, amplitude modulation, or phase modulation; and the receiving radar wave via the radar wave transceiver and demodulating the same to obtain an encoded file includes: demodulating the radar wave based on the modulation scheme to obtain the encoded file.

In some embodiments, the radar wave is a linear frequency modulation signal.

According to a third aspect of the present disclosure, there is provided a data transmitting method applied to a data transmitting system including one first mobile terminal and one or more second mobile terminals, wherein both of the first mobile terminal and the second mobile terminal are provided with a radar wave transceiver, the data transmitting method includes: encoding a data file to be sent to obtain an encoded file by the first mobile terminal; modulating the encoded file and sending the same in a form of radar wave via the radar wave transceiver by the first mobile terminal; receiving radar wave via the radar wave transceiver of the second mobile terminal and demodulating the same to obtain an encoded file by one or more second mobile terminals; and decoding the encoded file to obtain a data file by one or more second mobile terminals.

In some embodiments, the method further includes: determining a modulation scheme of the radar wave, wherein the modulation scheme includes at least one of the following: frequency modulation, amplitude modulation, or phase modulation; the modulating the encoded file and sending the same in the form of radar wave via the radar wave transceiver by the first mobile terminal includes: modulating the encoded file based on the modulation scheme and sending the same in the form of radar wave; and the receiving radar wave via the radar wave transceiver of the second mobile terminal by one or more second mobile terminals and demodulating the same to obtain an encoded file includes: demodulating the radar wave based on the modulation scheme to obtain the encoded file.

In some embodiments, the radar wave is a linear frequency modulation signal.

According to a fourth aspect of the present disclosure, there is provided a mobile terminal provided with a radar wave transceiver, the mobile terminal is configured to execute the data sending method according to the first aspect, and/or the data receiving method according to the second aspect.

In some embodiments, the mobile terminal is provided with two radar wave transceivers, and the two radar wave transceivers are respectively disposed on a front side and a rear side of the mobile terminal.

According to a fifth aspect of the present disclosure, there is provided a data sending device applied to a mobile terminal, the mobile terminal is provided with a radar wave transceiver, and the data sending device includes: an encoding unit configured to encode a data file to be sent to obtain an encoded file; and a sending unit configured to modulate the encoded file and send the same in the form of radar wave via the radar wave transceiver.

In some embodiments, the device further includes: a processing unit configured to determine a modulation scheme of the radar wave, wherein the modulation scheme includes at least one of the following: frequency modulation, amplitude modulation, or phase modulation; and the sending unit is configured to modulate the encoded file based on the modulation scheme and send the same in the form of radar wave.

In some embodiments, the radar wave is a linear frequency modulation signal.

According to a sixth aspect of the present disclosure, there is provided a data receiving device applied to a mobile terminal, the mobile terminal is provided with a radar wave transceiver, and the data receiving device includes: a receiving unit configured to receive radar wave via the radar wave transceiver and demodulate the same to obtain an encoded file; and a decoding unit configured to decode the encoded file to obtain a data file.

In some embodiments, the device further includes a processing unit configured to determine a modulation scheme of the radar wave, wherein the modulation scheme includes at least one of the following: frequency modulation, amplitude modulation, or phase modulation; and the receiving unit is configured to demodulate the radar wave based on the modulation scheme to obtain the encoded file.

In some embodiments, the radar wave is a linear frequency modulation signal.

According to a seventh aspect of the present disclosure, there is provided an electronic device comprising: memory storing instructions; and a processor configured to invoke instructions stored in the memory to execute the data sending method according to the first aspect, or the data receiving method according to the second aspect.

According to an eighth aspect of the present disclosure, there is provided a computer-readable storage medium, wherein instructions are stored thereon, and when the instruction is executed by a processor, executing the data sending method according to the first aspect, or the data receiving method according to the second aspect.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this disclosure, illustrate embodiments consistent with the present disclosure and, together with the description, serve to explain the principles of various embodiments of the present disclosure.
FIG. 1 is a schematic flowchart illustrating a data sending method according to some exemplary embodiments.
FIG. 2 is a schematic flowchart illustrating another data sending method according to some exemplary embodiments.
FIG. 3 is a schematic flowchart illustrating a data receiving method according to some exemplary embodiments.
FIG. 4 is a schematic flowchart illustrating another data receiving method according to some exemplary embodiments.
FIG. 5 is a schematic communication diagram illustrating a data transmitting method according to some exemplary embodiments.
FIG. 6 is a schematic flowchart illustrating a data transmitting method according to some exemplary embodiments.
FIG. 7 is a schematic diagram illustrating a mobile terminal according to some exemplary embodiments.
FIG. 8 is a schematic block diagram illustrating a data sending device according to some exemplary embodiments.
FIG. 9 is a schematic block diagram illustrating another data sending device according to some exemplary embodiments.
FIG. 10 is a schematic block diagram illustrating a data receiving device according to some exemplary embodiments.
FIG. 11 is a schematic block diagram illustrating another data receiving device according to some exemplary embodiments.
FIG. 12 is a schematic block diagram illustrating a device according to some exemplary embodiments.
FIG. 13 is a schematic block diagram illustrating an electronic device according to some exemplary embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the present disclosure. Instead, they are merely examples of apparatuses and methods consistent with aspects related to the present disclosure as recited in the appended claims.

In a conventional file sharing method, a lot of verification information may be needed, the steps are troublesome, and a network environment is required. If it is in scenarios such as open group meeting, etc., the sharing of files becomes more difficult.

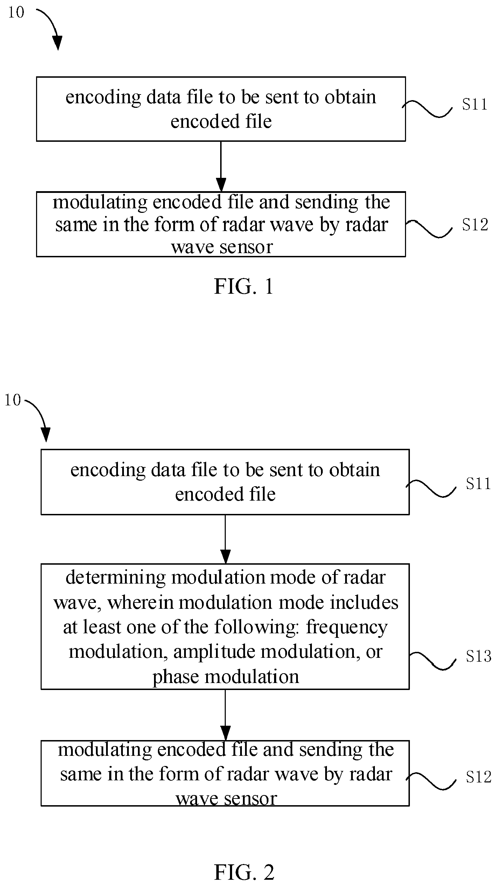

FIG. 1 shows a schematic flowchart of a data sending method 10, which can be applied to a mobile terminal provided with a radar wave transceiver, such as a mobile phone, a tablet, and the like, the radar wave transceiver can send data in the form of radar wave, and can also receive the radar wave, in which the radar wave may be an electromagnetic wave. Referring to FIG. 1, the data sending method 10 includes steps S11-S12, which are described in detail below:

In step S11, a data file to be sent is encoded to obtain an encoded file.

The user determines the data file to be sent and encodes the same to form an encoded file that can be sent by the radar wave.

The encoding mode can be set uniformly on the mobile terminal, and the encoding mode corresponds to the decoding mode to ensure the file transmission. Herein, the encoding mode can be set based on the form of the radar wave, for example, the encoding is performed based on the up-sweep frequency band and the down-sweep frequency band in the linear frequency modulation signal, or the data file is encoded into an encoded file of 0, 1 which is then sent via the radar wave, and the decoding mode is set corresponding to the encoding mode.

In step S 12, the encoded file is modulated and sent in the form of radar wave via the radar wave transceiver.

After encoding, the encoded file can be sent in the form of radar wave via the radar wave transceiver. The radar wave can propagate in a wide range in space, and can be received by other mobile terminals equipped with radar wave transceivers in this range. There is no need to use the network, and there is no need for Bluetooth pairing or other verification processes, thereby the file-sharing can be performed publicly, efficiently and conveniently.

FIG. 2 shows a schematic flowchart of another data sending method according to some exemplary embodiments, and referring to FIG. 2, the data sending method 10 further includes determining, in step S13, a modulation mode of the radar wave, wherein the modulation mode includes at least one of the following: frequency modulation, amplitude modulation, or phase modulation; the step S12 can include modulating the encoded file based on the modulation mode and sending the same in the form of radar wave. The modulation mode determines the frequency, amplitude and other forms of the radar wave, modulation modes of a sending end and a receiving end need to be unified to achieve data transmission. The modulation mode can be unified with default settings in the mobile terminal, and can also be determined based on the user's settings. In the present embodiment, the modulation mode can be set accordingly to achieve personalized communication matching in different scenarios, and the data transmission can be implemented between the mobile terminals which adapt the same modulation mode.

In some embodiments, the radar wave is a linear frequency modulation (LFM) signal, that is, a signal whose instantaneous frequency changes linearly with time, can ensure the transmission distance and improve the resolution. The encoding can be performed according to a linear frequency modulation mode.

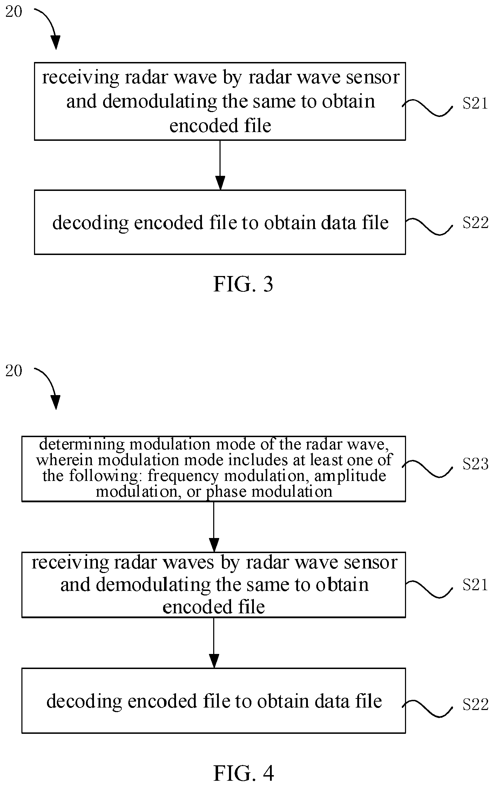

Based on the same inventive concept, FIG. 3 shows a schematic flowchart of a data receiving method 20 according to the embodiments of the present disclosure, which is also applied to the mobile terminal provided with the radar wave transceiver, and referring to FIG. 3, the data receiving method 20 includes: receiving radar wave via the radar wave transceiver and demodulating the same to obtain an encoded file in step S21; and decoding the encoded file to obtain a data file in step S22. In contrast to the data sending method 10, the mobile terminal can receive the radar wave via a radar wave transceiver, and demodulate the radar wave to obtain an encoded file through demodulation corresponding to the modulation, and then further perform decoding corresponding to the encoding so as to restore to the data file originally transmitted.

FIG. 4 shows a schematic flowchart of another data receiving method according to some exemplary embodiments, and as shown in FIG. 4, the data receiving method 20 further includes: determining a modulation mode of the radar wave in step S23, wherein the modulation mode includes at least one of the following: frequency modulation, amplitude modulation, or phase modulation; and the step S21 can further include: demodulating the radar wave based on the modulation mode to obtain the encoded file. Corresponding to some of the foregoing embodiments, the demodulation can be performed in the modulation mode corresponding to the modulation at the sending end, based on the predetermined modulation mode, so that the received radar wave can be demodulated into a correct encoded file.

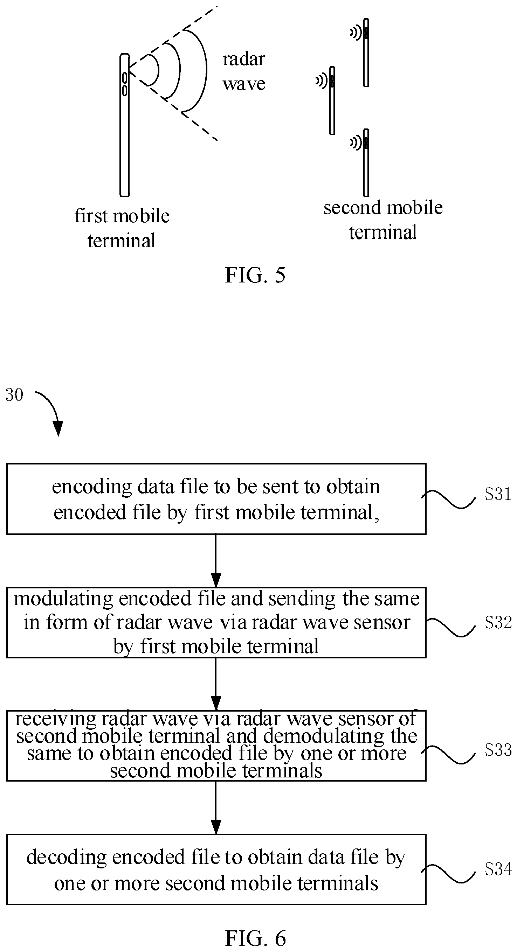

FIG. 5 shows a schematic communication diagram illustrating a data transmitting method according to some exemplary embodiments.

Based on the same inventive concept, according to the characteristics of the radar wave, the embodiments of the present disclosure also provide a data transmitting method 30 as shown in FIG. 6, which is applied to a data transmitting system including one first mobile terminal and one or more second mobile terminals, wherein both of the first mobile terminal and the second mobile terminal are provided with a radar wave transceiver.

FIG. 5 shows a schematic diagram of sending a data file from one first mobile terminal to a plurality of second mobile terminals via the radar wave, and at the same time, as shown in FIG. 6, the data transmitting method 30 includes:
encoding a data file to be sent to obtain an encoded file by the first mobile terminal in step S31;
modulating the encoded file and sending the same in the form of radar wave via the radar wave transceiver by the first mobile terminal in step S32;
receiving radar wave via the radar wave transceiver of the second mobile terminal and demodulating the same to obtain an encoded file in step S33 by one or more second mobile terminals; and
decoding the encoded file to obtain a data file in step S34 by one or more second mobile terminals.

In some embodiments, the data transmitting method 30 can further include determining a modulation mode of the radar wave, wherein the modulation mode includes at least one of the following: frequency modulation, amplitude modulation, or phase modulation. The modulation mode of the mobile terminal in the data transmitting system is set uniformly, thereby the file transmission is ensured, and the transmission can also be performed through different modulation modes in different scenarios, which ensures the security.

The radar wave can be sent in a wide range, and the radar wave is sent based on one mobile terminal, which enables other mobile terminals within the sending range to receive the radar wave via its own radar wave transceiver, such that the file-sharing can be performed publicly and conveniently in occasions such as meetings and lectures.

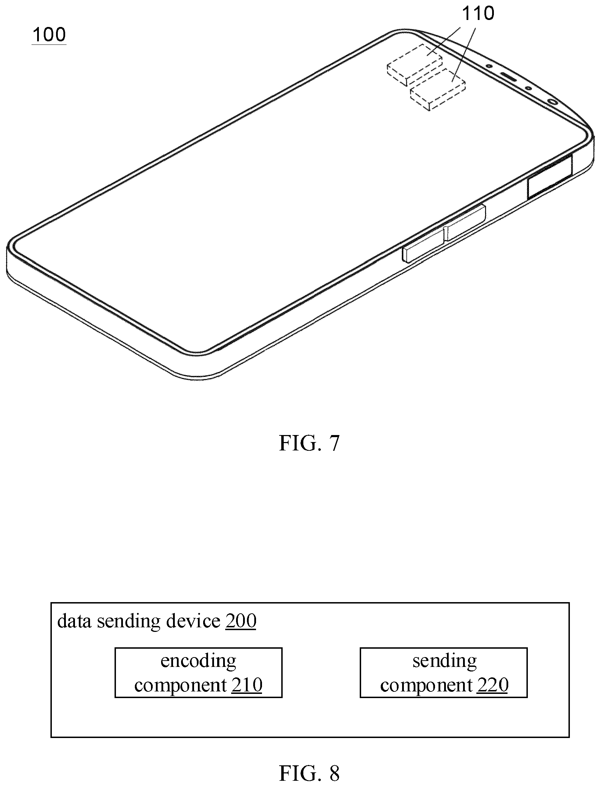

Based on the same inventive concept, FIG. 7 shows a schematic diagram of a mobile terminal 100 according to the embodiments of the present disclosure, and as shown in FIG. 7, the mobile terminal 100 is provided with a radar wave transceiver 110, and the mobile terminal 100 can be used to execute the data sending method 10 and/or the data receiving method 20 according to any one of the foregoing embodiments. The mobile terminal 100 can be used as a transmitting end of the radar wave to send data to other mobile terminals, and can also be used as a receiving end to receive the data sent from other mobile terminals.

In some embodiments, the mobile terminal 100 is provided with two radar wave transceivers 110, and the two radar wave transceivers 110 are respectively disposed on a front side and a rear side of the mobile terminal 100. The radar wave has a certain directionality, and in some cases, in order to ensure transmission distance and due to power limitations, the penetration for the obstacles is poor, and thus the radar wave transceivers 110 are respectively provided on the front side and the rear side of the mobile terminal 100, such that the success rate of receiving the radar wave is improved and the radar wave can be transmitted in the front and rear directions at the same time.

Based on the same inventive concept, FIG. 8 shows a data sending device 200, which is applicable to a mobile terminal provided with a radar wave transceiver, and the data sending device 200 includes a encoding unit 210 configured to encode a data file to be sent to obtain an encoded file; and a sending unit 220 configured to modulate the encoded file and send the same in the form of radar wave via the radar wave transceiver.

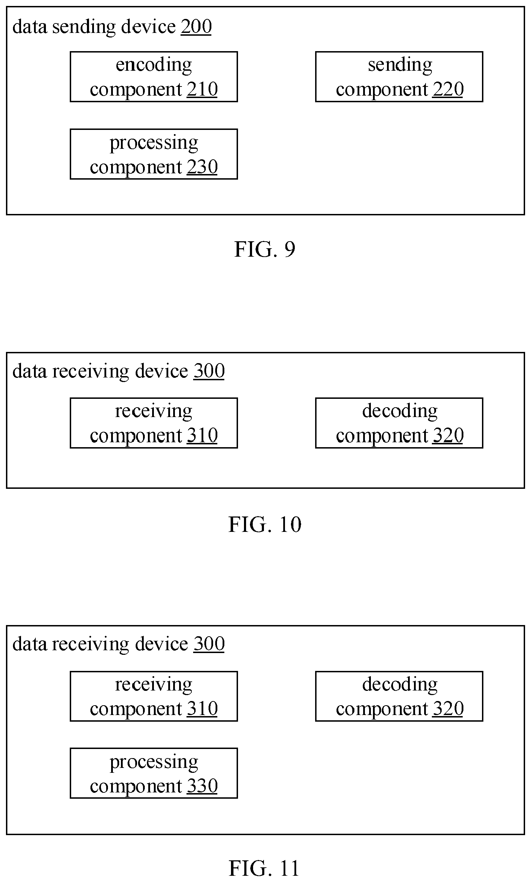

FIG. 9 shows a schematic block diagram of another data sending device 200 according to some exemplary embodiments, and as shown in FIG. 9, the data sending device 200 further includes: a processing unit 230 configured to determine a modulation mode of the radar wave, wherein the modulation mode includes at least one of the following: frequency modulation, amplitude modulation, or phase modulation; and the sending unit 220 is configured to modulate the encoded file based on the modulation mode and send the same in the form of radar wave.

In some embodiments, the radar wave is a linear frequency modulation signal.

With respect to the data sending device 200 in the above embodiments, the specific implementations for performing operations by individual units therein have been described in detail in the embodiments regarding the methods, which will not be elaborated herein.

Based on the same inventive concept, FIG. 10 shows a data receiving device 300 which is applicable to a mobile terminal provided with a radar wave transceiver, and the data receiving device includes: a receiving unit 310 configured to receive radar wave via the radar wave transceiver and demodulate the same to obtain an encoded file; and a decoding unit 320 configured to decode the encoded file to obtain a data file.

FIG. 11 shows a schematic block diagram of another data receiving device according to some exemplary embodiments, as shown in FIG. 11, the data receiving device 300 further includes: a processing unit 330 configured to determine a modulation mode of the radar wave, wherein the modulation mode includes at least one of the following: frequency modulation, amplitude modulation, or phase modulation; and the receiving unit 310 is configured to demodulate the radar wave based on the modulation mode to obtain the encoded file.

In some embodiments, the radar wave is a linear frequency modulation signal.

With respect to the data receiving device 300 in the above embodiments, the specific implementations for performing operations by individual modules therein have been described in detail in the embodiments regarding the methods, which will not be elaborated herein.

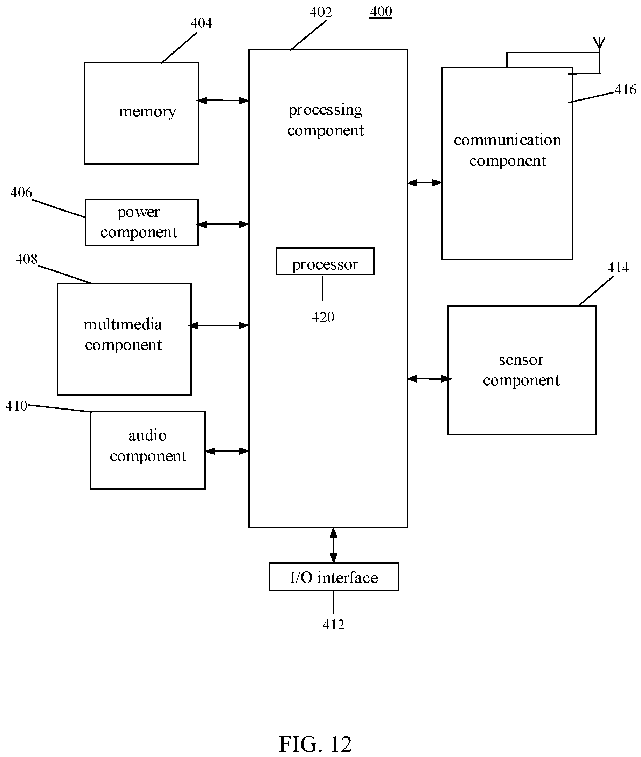

FIG. 12 is a schematic block diagram of a device according to any one of the foregoing embodiments according to some exemplary embodiments. For example, a device 400 may be a mobile phone, a computer, a digital broadcast terminal, a messaging device, a gaming console, a tablet, a medical device, fitness equipment, a personal digital assistant, and the like.

Referring to FIG. 12, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to implement all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, videos, etc. The memory 404 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 supplies power to various components of the device 400. The power component 406 may include a power management system, one or more power sources, and any other components associated with the generation, management, and distribution of power in the device 400.

The multimedia component 408 includes a screen providing an output interface between the device 400 and a user. In some embodiments, the screen may include a liquid crystal display (LCD) and a touch panel (TP). In some embodiments, organic light-emitting diode (OLED) displays can be employed.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 408 includes a front camera and/or a rear camera. The front camera and the rear camera can receive external multimedia data while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal can be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 can detect an on/off status of the device 400, relative positioning of components, e.g., the display and a keypad, of the device 400, the sensor component 414 can also detect a change in position of the device 400 or one component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 can also include an accelerometer sensor, a gyroscope sensor, a magnetic sensor, a pressure sensor, or a temperature sensor.

The communication component 416 is configured to facilitate wired or wireless communication between the device 400 and other devices. The device 400 can access a wireless network based on a communication standard, such as Wi-Fi, 2G, 3G, 4G, or 5G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a computer-readable storage medium including instructions, such as the memory 404 including the instructions executable by the processor 420 in the device 400, for performing the above-described methods. For example, the computer-readable storage medium can be a ROM, a random access memory (RAM), a CD-ROM, a magnetic tape, a floppy disc, an optical data storage device, and the like.

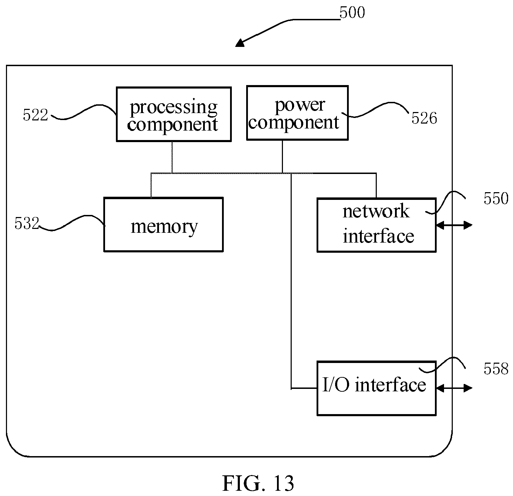

FIG. 13 is a block diagram of an electronic device 500 according to some exemplary embodiments. For example, the electronic device 500 can be provided as a server. Referring to FIG. 13, the electronic device 500 includes a processing component 522, which further includes one or more processors, and memory resources represented by a memory 532, for storing instructions executable by the processing component 522, such as application programs. The application program stored in the memory 532 can include one or more modules each corresponding to a set of instructions. In addition, the processing component 522 is configured to execute instructions to perform the above method.

The electronic device 500 can also include a power component 526 configured to perform power management of the electronic device 500, a wired or wireless network interface 550 configured to connect the electronic device 500 to the network, and an input/output (I/O) interface 558. The electronic device 500 can perform operations based on an operating system stored in the memory 532, such as Windows Server™, Mac OS X™, Unix™, Linux™, FreeBSD™, or the like.

Various embodiments of the present disclosure can include one or more of the following advantages. A wide range of data transmission can be performed in the form of radar wave, by providing the radar wave transceiver in the mobile terminal, thereby enabling the data transmission more convenient without the network environment and complicated steps, especially in public multi-person occasions, one-to-many data transmission can be performed efficiently and conveniently.

The various device components, modules, units, blocks, or portions may have modular configurations, or are composed of discrete components, but nonetheless can be referred to as "modules" in general. In other words, the "components," "modules," "blocks," "portions," or "units" referred to herein may or may not be in modular forms, and these phrases may be interchangeably used.

In the present disclosure, the terms "installed," "connected," "coupled," "fixed" and the like shall be understood broadly, and can be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infras tructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the scope of the disclosure defined in the following claims, the scope of which is to be accorded the broadest interpretation so as to encompass such modifications and equivalent structures.

It should be understood that "a plurality" or "multiple" as referred to herein means two or more. "And/or," describing the association relationship of the associated objects, indicates that there may be three relationships, for example, A and/or B may indicate that there are three cases where A exists separately, A and B exist at the same time, and B exists separately. The character "/" generally indicates that the contextual objects are in an "or" relationship.

In the present disclosure, it is to be understood that the terms "lower," "upper," "under" or "beneath" or "underneath," "above," "front," "back," "left," "right," "top," "bottom," "inner," "outer," "horizontal," "vertical," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

In the present disclosure, a first element being "on" a second element may indicate direct contact between the first and second elements, without contact, or indirect geometrical relationship through one or more intermediate media or layers, unless otherwise explicitly stated and defined. Similarly, a first element being "under," "underneath" or "beneath" a second element may indicate direct contact between the first and second elements, without contact, or indirect geometrical relationship through one or more intermediate media or layers, unless otherwise explicitly stated and defined.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. A data sending method, applied to a mobile terminal provided with a radar wave transceiver, the data sending method comprising:
encoding (S11) a data file to be sent to obtain an encoded file; and
modulating (S12) the encoded file and sending the same in a form of radar wave via the radar wave transceiver.

2. The data sending method according to claim 1, further comprising:
determining (S13) a modulation mode of the radar wave, wherein the modulation mode comprises at least one of the following: frequency modulation, amplitude modulation, and phase modulation; and
the modulating (S12) the encoded file and sending the same in a form of radar wave via the radar wave transceiver comprising:
modulating the encoded file based on the modulation mode and sending the same in the form of radar wave.

3. The data sending method according to claim 1 or 2, wherein the radar wave is a linear frequency modulation signal.

4. A data receiving method, applied to a mobile terminal provided with a radar wave transceiver, the data receiving method comprising:
receiving (S21) radar wave via the radar wave transceiver and demodulating the same to obtain an encoded file; and
decoding (S22) the encoded file to obtain a data file.

5. The data receiving method according to claim 4, further comprising:
determining (S23) a modulation mode of the radar wave, and the modulation mode comprises at least one of the following: frequency modulation, amplitude modulation, and phase modulation; and
the receiving (S21) radar wave via the radar wave transceiver and demodulating the same to obtain an encoded file comprises:
demodulating the radar wave based on the modulation mode to obtain the encoded file.

6. The data receiving method according to claim 4 or 5, wherein the radar wave is a linear frequency modulation signal.

7. A data transmitting method, applied to a data transmitting system including one first mobile terminal and one or more second mobile terminals, and each of the first mobile terminal and the second mobile terminal is provided with a radar wave transceiver, the data transmitting method comprising:
encoding (S31) a data file to be sent to obtain an encoded file by the first mobile terminal;
modulating (S32) the encoded file and sending the same in a form of radar wave via the radar wave transceiver by the first mobile terminal;
receiving (S33) radar wave via the radar wave transceiver of the second mobile terminal and demodulating the same to obtain the encoded file by one or more second mobile terminals; and
decoding (S34) the encoded file to obtain a data file by one or more second mobile terminals.

8. The data transmitting method according to claim 7, further comprising: determining a modulation mode of the radar wave, wherein the modulation mode comprises at least one of the following: frequency modulation, amplitude modulation, and phase modulation;
the modulating (S32) the encoded file and sending the same in the form of radar wave via the radar wave transceiver by the first mobile terminal comprising:
modulating the encoded file based on the modulation mode and sending the same in the form of radar wave; and
the receiving (S33) radar wave via the radar wave transceiver of the second mobile terminal and demodulating the same to obtain an encoded file by one or more second mobile terminals comprising:
demodulating the radar wave based on the modulation mode to obtain the encoded file.

9. The data transmitting method according to claim 7 or 8, wherein the radar wave is a linear frequency modulation signal.

10. A mobile terminal implementing the method of any of claims 1-3, and/or any of claims 4-6, comprising the radar wave transceiver, and a display screen.

11. The mobile terminal according to claim 10, wherein the mobile terminal is provided with two radar wave transceivers disposed respectively on a front side and a rear side of the mobile terminal.

12. A data sending device implementing the data sending method of any of claims 1-3, comprising:
memory storing instructions; and
a processor configured to invoke instructions stored in the memory to perform operations of the data sending method.

13. A data receiving device implementing the data receiving method of any of claims 4-6, applied to a mobile terminal provided with a radar wave transceiver, the data receiving device comprising:
memory storing instructions; and
a processor configured to invoke instructions stored in the memory to execute operations of the data receiving method.

14. A non-transitory computer-readable storage medium having stored therein instructions for execution by a processor to implement the data sending method according to any of claims 1-3, and/or the data receiving method according to any of claims 4-6.

15. A data sharing system implementing the method of claim 1, comprising:
the mobile terminal; and
a plurality of second mobile terminals each having a radar wave transceiver and configured to:
receive radar wave via the radar wave transceiver;
determine a modulation mode of the radar wave, and the modulation mode comprises at least one of: frequency modulation, amplitude modulation, and phase modulation;
demodulate the radar wave based on the modulation mode to obtain an encoded file; and
decode the encoded file to obtain a data file;
wherein the data sharing system is configured to share the data file without a network environment.
